(19) **Europäisches Patentamt / European Patent Office / Office européen des brevets**

(11) **EP 3 706 208 B1**

(12) # EUROPEAN PATENT SPECIFICATION

(45) Date of publication and mention
of the grant of the patent:
**08.09.2021 Bulletin 2021/36**

(21) Application number: **20161073.0**

(22) Date of filing: **05.03.2020**

(51) Int Cl.:
$H01M\ 4/131^{(2010.01)}$  $H01M\ 4/1391^{(2010.01)}$
$H01M\ 4/525^{(2010.01)}$  $H01M\ 10/0525^{(2010.01)}$
$H01M\ 4/02^{(2006.01)}$

(54) **POSITIVE ACTIVE MATERIAL FOR RECHARGEABLE LITHIUM BATTERY, METHOD OF PREPARING THE SAME AND RECHARGEABLE LITHIUM BATTERY INCLUDING THE SAME**

POSITIVES AKTIVMATERIAL FÜR WIEDERAUFLADBARE LITHIUMBATTERIE, VERFAHREN ZUR HERSTELLUNG DAVON UND WIEDERAUFLADBARE LITHIUMBATTERIE DAMIT

MATÉRIAU ACTIF POSITIF POUR BATTERIE AU LITHIUM RECHARGEABLE, SON PROCÉDÉ DE PRÉPARATION ET BATTERIE AU LITHIUM RECHARGEABLE LE COMPRENANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.03.2019 KR 20190025305**
**04.03.2020 KR 20200027096**

(43) Date of publication of application:
**09.09.2020 Bulletin 2020/37**

(73) Proprietor: **Samsung SDI Co., Ltd.**
**Gyeonggi-do 17084 (KR)**

(72) Inventors:
• **Kim, Young-Ki**
**17084 Yongin-si, Gyeonggi-do (KR)**
• **Park, Jungjoon**
**17084 Yongin-si, Gyeonggi-do (KR)**

• **Lee, Soonrewl**
**17084 Yongin-si, Gyeonggi-do (KR)**
• **Chae, Youngjoo**
**17084 Yongin-si, Gyeonggi-do (KR)**
• **Choi, Ickkyu**
**17084 Yongin-si, Gyeonggi-do (KR)**
• **Hong, Mingzi**
**17084 Yongin-si, Gyeonggi-do (KR)**
• **Hong, Soonkie**
**17084 Yongin-si, Gyeonggi-do (KR)**

(74) Representative: **Gulde & Partner**
**Patent- und Rechtsanwaltskanzlei mbB**
**Wallstraße 58/59**
**10179 Berlin (DE)**

(56) References cited:
**EP-A1- 3 396 746      EP-A1- 3 647 269**
**WO-A2-2014/205215      US-A1- 2012 015 250**
**US-A1- 2013 323 598      US-A1- 2019 067 689**

**Description**

**BACKGROUND OF THE INVENTION**

(a) Field of the Invention

A positive active material for a rechargeable lithium battery, a method of preparing the same, and a rechargeable lithium battery including the same are disclosed.

(b) Description of the Related Art

In order to meet down-sizing and high performance of various devices, rechargeable lithium batteries have become increasingly important in terms of high energy density as well as down-sizing and weight reduction. In addition, high capacity and high temperature stability of rechargeable lithium batteries, and stability at a high voltage become important to apply to electric vehicles and the like.

Various positive active materials have been investigated to realize rechargeable lithium batteries for applications to the uses.

Nickel-based lithium transition metal oxide including Ni, Co, and Mn simultaneously provides higher discharge capacity per unit weight than $LiCoO_2$, but provides low capacity per unit volume due to a low packing density and exhibits low discharge capacity in a rechargeable lithium battery. In addition, a rechargeable lithium battery including the nickel-based lithium transition metal oxide may show deteriorated safety during operation at a high voltage.

In particular, when a Ni content is about 33 at% to about 60 at%, charge/discharge efficiency of the rechargeable battery employing it is less than about 90%, a cation mixing value is about 5%, and the Li/transition metal mole ratio of 1.01 to 1.05. Theoretically, an ideal ratio of Li/metal (transition metal except Li) is 1.00. However, in a conventional synthesis method of a Ni-based positive active material, since Li is excessively mixed relative to the transition metal, charge/discharge efficiency of a rechargeable lithium battery employing the same may be deteriorated and a cation mixing value may be increased. Examples may be found in EP 3 396 746 A1, US 2019/067689 A1, US 2013/323598 A1, US 2012/015250 A1, WO 2014/205215 A2 or EP 3 647 269 A1.

Therefore, there are increasing needs for a positive active material having an ideal layered structure and a high efficiency rechargeable lithium battery employing the same, by decreasing cation mixing of the positive active material.

**SUMMARY OF THE INVENTION**

An embodiment provides a positive active material for a rechargeable lithium battery having improved phase stability due to an ideal layered structure (a structure for minimizing cation mixing).

(Not falling under the protection scope of the present application) Another embodiment provides a method of preparing the positive active material.

Another embodiment provides a rechargeable lithium battery having improved charge/discharge capacity, charge/discharge efficiency, and cycle-life characteristics, by including the positive active material.

One aspect of the present disclosure refers to a positive active material for a rechargeable lithium battery that includes particles of a first compound represented by Chemical Formula 1 and particles of a second compound represented by Chemical Formula 2, wherein the particles of the first compound have an average particle diameter D50 of 15 μm to 20 μm and the particles of the second compound have an average particle diameter D50 of 2 μm to 5 μm measured by scanning electron microscopy, SEM,. The first compound and the second compound have a Ni content of 50 at% to 60 at% of the metal elements excluding Li:

[Chemical Formula 1] $\quad\quad Li_aNi_xCo_yM^1_zO_2$

[Chemical Formula 2] $\quad\quad Li_aNi_xCo_yM^2_zO_2$

In Chemical Formula 1 and Chemical Formula 2, $0.9 \le a \le 1.05$, $0.5 \le x \le 0.6$, $0.05 \le y \le 0.35$, $0.05 \le z \le 0.35$, $x + y + z = 1$, and $M^1$ and $M^2$ are independently at least one metal element selected from Mn, Al, Cr, Fe, V, Mg, Ti, Zr, Nb, Mo, W, Cu, Zn, Ga, In, Sn, La, and Ce.

Further, at least one of the particles of the first compound and the particles of the second compound comprises a core and a surface layer surrounding the core and a Ni atom concentration (at%) of the metal elements except Li in the surface layer is higher than a Ni atom concentration (at%) of the metal elements except Li in the core. The surface layer may be a region corresponding to a depth of 200 nm from the surface of particles of the first compound or particles of the second compound.

According to another embodiment, a cation mixing is less than or equal to 3%.

According to another embodiment, the particles of the second compound have a needle-shape, a sheet-shape, or a combination thereof.

According to another embodiment, wherein the particles of the first compound and the particles of the second compound are mixed in a weight ratio of 90 : 10 to 50 : 50.

(Not falling under the protection scope of the present application) Another aspect of the present disclosure refers to a method of preparing a positive active material, the method comprising the steps of:

mixing particles of Compound 1A represented by Chemical Formula 1A, particles of Compound 2A represented by Chemical Formula 2A, and a lithium salt to prepare a mixture;

first heat-treating the mixture under a rapid temperature-increasing condition to prepare a first fired product comprising residual lithium; and

second heat-treating the first fired product to prepare the positive active material:

[Chemical Formula 1A] $Ni_xCo_yM^1_z(OH)_2$

[Chemical Formula 2A] $Ni_xCo_yM^2_z(OH)_2$

wherein, in Chemical Formula 1A and Chemical Formula 2A, $0.5 \le x \le 0.6$, $0.05 \le y < 0.35$, $0.05 \le z \le 0.35$, $x + y + z = 1$, and $M^1$ and $M^2$ are independently selected from Mn, Al, Cr, Fe, V, Mg, Ti, Zr, Nb, Mo, W, Cu, Zn, Ga, In, Sn, La, and Ce,

wherein the particles of the first compound have an average particle diameter D50 of 15 $\mu$m to 20 $\mu$m and the particles of the second compound have an average particle diameter D50 of 2 $\mu$m to 5 $\mu$m measured by scanning electron microscopy, SEM.

Accordign to one embodiment, the particles of Compound 1A and the particles of Compound 2A are mixed in a weight ratio of 90 : 10 to 50 : 50.

According to another embodiment, in the mixture, a mole ratio of Li/(Ni + Co + Mn) is greater than or equal to 0.99.

According to another embodiment, the first heat-treating comprises a process of maintaining the mixture at 800 ° C to 1000 ° C for 1 hour to 4 hours.

Another aspect of the present disclosure refers to a rechargeable lithium battery comprising a positive electrode comprising the before mentioned positive active material, a negative electrode comprising a negative active material; and an electrolyte.

According to one embodiment, a differential capacity (dQ/dV)-voltage charge/discharge graph of the rechargeable lithium battery satisfies Relation 1:

$$V_s < V_1 \le 3.6$$

wherein, in Relation 1, $V_1$ is a voltage value at a point where the tangent meets the line dQ/dV = 0 at a value corresponding to 50% of the first peak value of the differential capacity (dQ/dV)-voltage charge/discharge graph and $V_s$ is a charge start voltage, wherein the graph is obtained using half-cells which are CC/CV-charged at 0.2 C and 4.25 V with a cut-off of 0.05 C and CC-discharged at 0.2 C with a cut-off of 3 V for the first charge/discharge.

The charge start voltage ($V_s$) of the rechargeable lithium battery may be less than or equal to 3.55 V; and/or the voltage ($V_1$) may be less than or equal to 3.58 V, in particular may be the voltage ($V_1$) 3.50 V to 3.58 V.

A differential capacity (dQ/dV)-voltage charge/discharge graph may have at least two peak values in the range of 3.60 V to 3.85 V, and the second peak value may be larger than the first peak value. The first peak value may be 450 mAhg$^{-1}$V$^{-1}$ to 550 mAhg$^{-1}$V$^{-1}$ and the second peak value may be 550 mAhg$^{-1}$V$^{-1}$ to 650 mAhg$^{-1}$V$^{-1}$.

It is possible to provide a battery in which cation mixing is reduced, and charge/discharge capacity and charge/discharge efficiency are improved.

It is also possible to provide a battery in which unreacted residual lithium and gas generation on the surface of the positive active material are suppressed and phase stability and cycle-life characteristics are improved.

BRIEF DESCRIPTION OF THE DRAWINGS

FIG. 1 is a schematic view illustrating a structure of a rechargeable lithium battery according to an embodiment.

FIGS. 2A to 2D show charge start voltages ($V_s$) in $1^{st}$ differential capacity (dQ/dV)-voltage charge/discharge graphs depending on voltage changes of the half-cells manufactured in Example 2 and Comparative Examples 8 to 10, respectively.

FIGS. 3A to 3D show voltages ($V_1$) in $1^{st}$ differential capacity (dQ/dV)-voltage charge/discharge graphs depending on voltage changes of the half-cells manufactured in Example 2 and Comparative Examples 8 to 10.

FIG. 3E shows $1^{st}$ differential capacity (dQ/dV)-voltage charge/discharge graphs depending on voltage changes of the half-cells manufactured in Comparative Example 7, 8, and 10 to 12.

FIGS. 4A to 4D show comparisons of $1^{st}$ differential capacity (dQ/dV)-voltage charge/discharge graphs depending on voltage changes and $2^{nd}$ differential capacity (dQ/dV)-voltage charge/discharge graphs depending on voltage changes of the half-cells manufactured in Example 2 and Comparative Examples 8 to 10.

FIG. 5 is a graph showing high temperature cycle-life characteristics of the half-cells manufactured in Example 2 and Comparative Examples 8 to 10.

DETAILED DESCRIPTION OF THE EMBODIMENTS

Hereinafter, embodiments of the present disclosure are described in detail. However, these embodiments are exemplary, the present disclosure is not limited thereto and the present disclosure is defined by the scope of claims.
As used herein, when a specific definition is not otherwise provided, "first (or second) differential capacity (dQ/dV)-voltage charge/discharge graphs depending on voltage changes" refers to a graph showing the changes in differential capacity (dQ/dV) depending on voltage changes of first (or second) charging/discharging half-cells.
As used herein, when specific definition is not otherwise provided, It will be understood that when an element such as a layer, film, region, or substrate is referred to as being "on" another element, it can be directly on the other element or intervening elements may also be present.
An embodiment provides a positive active material for a rechargeable lithium battery that includes particles of a first compound represented by Chemical Formula 1 and particles of a second compound having a smaller particle diameter than the first compound and represented by Chemical Formula 2, wherein the first compound and the second compound have a Ni content of 50 at% to 60 at% of the metal elements excluding Li. A rechargeable lithium battery including the particles of first compound and particles of the second compound satisfies Relation 1 in a differential capacity (dQ/dV)-voltage charge/discharge graph:

[Chemical Formula 1] $\quad Li_aNi_xCoyM^1_zO_2$

[Chemical Formula 2] $\quad Li_aNi_xCo_yM^2_zO_2$

In Chemical Formula 1 and Chemical Formula 2, $0.9 \le a \le 1.05$, $0.5 \le x \le 0.6$, $0.05 \le y \le 0.35$, $0.05 \le z \le 0.35$, $x + y + z = 1$, and $M^1$ and $M^2$ are independently at least one metal element selected from Mn, Al, Cr, Fe, V, Mg, Ti, Zr, Nb, Mo, W, Cu, Zn, Ga, In, Sn, La, and Ce.

## [Relation 1]

$$V_s < V_1 \le 3.6$$

In Relation 1, $V_1$ is a voltage value at a point where the tangent meets the line dQ/dV = 0 at a value corresponding to 50% of the first peak value of the differential capacity (dQ/dV)-voltage charge/discharge graph and $V_s$ is a charge start voltage.
In the first compound and the second compound, a nickel content of the total metals except lithium is 50 at% to 60 at%, for example 51 at% to 59 at%, in particular 52 at% to 58 at%, most preferred 53 at% to 57 at%. Accordingly, the charge/discharge capacity, efficiency, and cycle-life characteristics of the battery may be improved.

In general, as the content of nickel included in the positive active material increases, the charge start voltage ($V_s$) and the voltage ($V_1$) of the battery tend to be lowered, and thus charge/discharge capacity and charge/discharge efficiency are improved. However, as described above, the positive active material according to the embodiment has a relatively low charge start voltage ($V_s$) and a voltage ($V_1$) in spite of low nickel content, thereby improving charge/discharge capacity and charge/discharge efficiency of the battery.

Meanwhile, in the first compound and the second compound, a mole ratio (Mn/Ni) of manganese relative to nickel may independently fall in the range of 0.36 to 0.55, for example, 0.45 to 0.55, and a mole ratio (Mn/Co) of manganese relative to cobalt may fall in the range of 0.8 to 2.0, for example, 1.25 to 2.0. Accordingly, a commercially available high nickel NCM-based positive active material has an initial charge/discharge efficiency of less than 90%, but the positive active material according to the embodiment may obtain an initial charge/discharge efficiency of greater than or equal to 92%, and it also has an advantage of reducing manufacturing process costs as less cobalt is used.

The particles of the second compound have a smaller particle size than the particles of the first compound. More precisely, the average particle diameter (D50) of the particles of the first compound is greater than or equal to 15 $\mu$m, greater than or equal to 16 $\mu$m, or greater than or equal to 17 $\mu$m, and less than or equal to 20 $\mu$m, less than or equal to 19 $\mu$m, or less than or equal to 18 $\mu$m. The particles of the second compound have an average particle diameter (D50) of greater than or equal to 2 $\mu$m or greater than or equal to 3 $\mu$m, and less than or equal to 5 $\mu$m, or less than or equal to 4 $\mu$m. A difference in average particle diameter of the particles of the first compound and the particles of the second compound may be greater than or equal to 10 $\mu$m, greater than or equal to 11 $\mu$m, or greater than or equal to 12 $\mu$m, and less than or equal to 18 $\mu$m, less than or equal to 17 $\mu$m, or less than or equal to 16 $\mu$m. When the average particle diameters of the particles of the first compound and the particles of the second compound are each within the above ranges, an electrode mixture density may increase, and the high rate characteristics of the battery may be improved.

Meanwhile, the particles of the first compound and the second compound may be in the form of secondary particles in which a plurality of primary particles are assembled, and the average particle diameter (D50) then means an average particle diameter (D50) of the secondary particles.

In the present disclosure, the particle diameter is defined as the average particle diameter (D50) based on 50% of the volume cumulative amount in the particle size distribution curve. The particle diameter is measured by an electron microscopy examination using a scanning electron microscopy (SEM). In alternative, the particle diameter may be, for example, measured by a field emission scanning electron microscopy (FE-SEM), or a laser diffraction method. It may be measured by the laser diffraction method as follows. The particles to be measured are dispersed in a dispersion medium and then introduced into a commercially available laser diffraction particle size measuring apparatus (for example, MT 3000 of Microtrac), ultrasonic waves of about 28 kHz are irradiated with an output of about 60W, and an average particle diameter (D50) in 50% reference of the particle size distribution in a measuring apparatus may be calculated.

In addition, in the present disclosure, the particle size may refer to a diameter when the particle shape is a spherical shape, and when the particle has a shape like a plate shape or a needle shape other than a spherical shape, the particle diameter may refer to the longest length of the particle.

A differential capacity (dQ/dV)-voltage (V) charge/discharge graph of a rechargeable lithium battery including the particles of the first compound and the second compound satisfies Relation 1.

[Relation 1]

$$V_s < V_1 \leq 3.6$$

In Relation 1, $V_1$ is a voltage value at a point where the tangent meets the line dQ/dV = 0 at a value corresponding to 50% of the first peak value of the differential capacity (dQ/dV)-voltage charge/discharge graph and $V_s$ is a charge start voltage. The graph is obtained using half-cells which are CC/CV-charged at 0.2 C and 4.25 V with a cut-off of 0.05 C and CC-discharged at 0.2 C with a cut-off of 3 V for the first charge/discharge.

When the charge start voltage ($V_s$) and the voltage ($V_1$) correspond to Relation 1, the charge/discharge capacity and the charge/discharge efficiency of the battery may be improved.

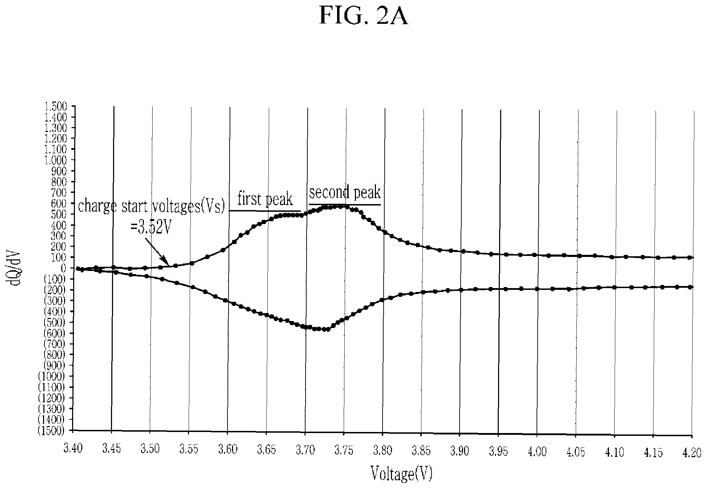

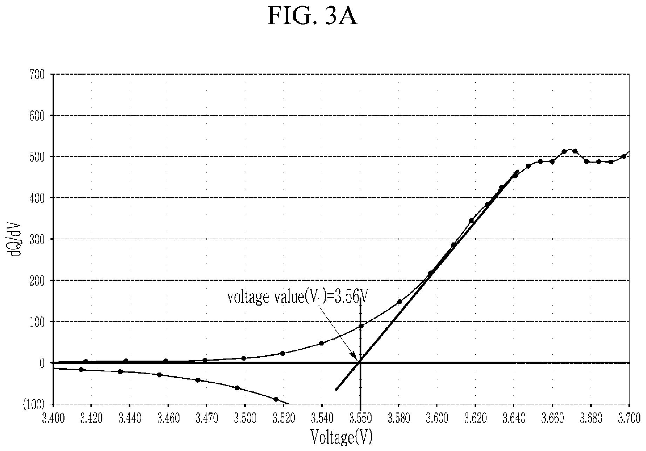

Hereinafter, the charge start voltage ($V_s$) and the voltage ($V_1$) of Relation 1 will be described with reference to FIGS. 2A and 3A.

FIG. 2A shows a charge start voltage ($V_s$) in 1st differential capacity (dQ/dV)-voltage charge/discharge graphs depending on a voltage change of the half-cell manufactured in Example 2, and FIG. 3A shows a voltage ($V_1$) in a 1st differential capacity (dQ/dV)-voltage charge/discharge graph depending on a voltage change of the half-cell manufactured in Example 2.

Referring to FIG. 2A, in a 1st differential capacity (dQ/dV)-voltage charge/discharge graph depending on the voltage change, a point at which dQ/dV changes from 0 to a positive (+) value is the charge start voltage ($V_s$). For example, in FIG. 2A, the charge start voltage ($V_s$) corresponds to 3.52 V.

Referring to FIG. 3A, in a 1st differential capacity (dQ/dV)-voltage charge/discharge graph depending on a voltage change, a point where the tangent meets line dQ/dV=0 at the point corresponding to about 50% of the first peak value is the voltage ($V_1$). For example, in FIG. 3A, the voltage ($V_1$) corresponds to about 3.56 V.

Meanwhile, as used herein, "a peak value of the differential capacity (dQ/dV)-voltage charge/discharge graph" indicates a dQ/dV value at the point at which a slope of the differential capacity (dQ/dV)-voltage charge/discharge graph is changed from a positive value (+) to a negative value (-).

The charge start voltage ($V_s$) may be less than or equal to 3.55 V, for example, less than or equal to 3.54 V, less than or equal to 3.53 V, or less than or equal to 3.52 V. Charging of the rechargeable lithium battery may be performed while increasing a voltage from a low voltage to a high voltage under constant current conditions. When the charge start voltage ($V_s$) is within the above range, an area enclosed by the differential capacity (dQ/dV)-voltage charge/discharge graph and the straight line of differential capacity (dQ/dV) = 0, that is, the battery charge/discharge capacity may increase. As a result, the charge/discharge capacity and the charge/discharge efficiency may be improved.

In the positive active material according to an embodiment, the voltage ($V_1$) may be less than or equal to 3.58 V, for example 3.50 V to 3.58 V, or 3.54 V to 3.58 V. The charge start voltage ($V_s$) and the voltage ($V_1$) are each involved in the form of the differential capacity (dQ/dV)-voltage (V) graph, and the charge start voltage ($V_s$) and the voltage ($V_1$) tend to be proportional to each other. For example, when the voltage ($V_1$) falls within the above range, the charge/discharge capacity and the charge/discharge efficiency may be improved.

The 1st differential capacity (dQ/dV)-voltage charge/discharge graph has at least two peak values in the range of 3.60 V to 3.85 V, and the second peak value may be larger than the first peak value. In this case, the charge/discharge capacity and the charge/discharge efficiency may be improved.

The first peak value may be 450 $mAhg^{-1}V^{-1}$ to 550 $mAhg^{-1}V^{-1}$, for example, 460 $mAhg^{-1}V^{-1}$ to 540 $mAhg^{-1}V^{-1}$, 470 $mAhg^{-1}V^{-1}$ to 530 $mAhg^{-1}V^{-1}$, 480 $mAhg^{-1}V^{-1}$ to 520 $mAhg^{-1}V^{-1}$, or 490 $mAhg^{-1}V^{-1}$ to 510 $mAhg^{-1}V^{-1}$. The second peak value may be 550 $mAhg^{-1}V^{-1}$ to 650 $mAhg^{-1}V^{-1}$, for example, 560 $mAhg^{-1}V^{-1}$ to 640 $mAhg^{-1}V^{-1}$, 570 $mAhg^{-1}V^{-1}$ to 630 $mAhg^{-1}V^{-1}$, 580 $mAhg^{-1}V^{-1}$ to 620 $mAhg^{-1}V^{-1}$, or 590 $mAhg^{-1}V^{-1}$ to 610 $mAhg^{-1}V^{-1}$. When the first peak value and the second peak value are within the ranges, charge/discharge capacity and charge/discharge efficiency may be improved.

Meanwhile, in the half-cell including the positive active material according to the embodiment, the shape of the 2nd differential capacity (dQ/dV)-voltage charge/discharge graph of the differential capacity (dQ/dV)-voltage (V) closely matches the shape of the 1st differential capacity (dQ/dV)-voltage charge/discharge graph of the differential capacity (dQ/dV)-voltage (V), and the reason is considered to be that phase structures of the positive active material remains constant even after the first charge/discharge process. That is, due to the ideal layered structure (for minimizing the cation mixing) of the positive active material, phase stability of the positive active material may be improved, and charge/discharge capacity, charge/discharge efficiency, and cycle-life characteristics of the battery may be improved.

At least one of the first compound and the second compound may include a core and a surface layer surrounding the core.

The surface layer may be a region within a depth of about 200 nm, for example about 190 nm or about 180 nm from a surface of the first compound secondary particle or the second compound secondary particle, and the core may be a remaining region except the surface layer.

In the positive active material, the Ni atom concentration (at%) of the surface layer is higher than the Ni atom concentration (at%) of the core.

The positive active material may be prepared through two heat-treatment processes. A large amount of residual lithium present on the surface of the secondary particles generated during the first heat-treating process is introduced into the secondary particles by reacting with the transition metal hydroxide during the second heat-treating. Thereby, it is thought that the nickel content of the positive active material surface layer is increased accordingly. As a result, since the nickel content in the surface layer, which is the region where lithium ions are most active, is relatively high, the performance of the battery may be improved.

The positive active material may have a cation mixing of less than or equal to about 3%, for example, less than or equal to about 2.9%, less than or equal to about 2.8%, less than or equal to about 2.7%, less than or equal to about 2.6%, less than or equal to about 2.5%, or less than or equal to about 2.4%.

Meanwhile, the cation mixing refers to a phenomenon that Li+ (0.76 Å) and $Ni^{2+}$ (0.69 Å) having a similar ion radius exchange their sites and form a crystal. Specifically, as nickel tends to prefer a divalent valence rather than a trivalent valence, a divalent nickel ion ($Ni^{2+}$) having a similar ion radius to lithium ion may be mixed into empty space of the lithium layer having a lack of lithium caused by volatilizing a raw material of lithium salt during a high temperature firing. As a result, it may cause problems of producing a lithium nickel oxide having a non-stoichiometric composition. In addition, $Ni^{2+}$ mixed into the lithium layer may interrupt diffusion of lithium ions and also may greatly increase irreversibility of the ion oxidation-reduction reaction of the battery, so that capacity of the rechargeable battery may be deteriorated. When the positive active material is prepared, the first heat-treating is performed at a high temperature, a rapid temperature-increasing condition, and a short time, thereby reducing the cation mixing in the above range.

If the cation mixing falls within the above range, there are no problems caused by the cation mixing as described above.

Meanwhile, the cation mixing (%) means a ratio (%) of a portion of nickel ($Ni^{2+}$) ion mixed to the Li site and may be calculated by measuring by an X-ray diffraction (XRD) analysis.

The first compound and the second compound are mixed at a weight ratio of 90 : 10 to 50 : 50, for example, 80 : 20 to 70 : 30. When the mixing ratio of the first compound and the second compound is within the above range, a mixture density of the positive active material may be increased, and a swelling phenomenon due to gas generation at high voltage and high temperature may be reduced.

The second compound may have a needle-shape, a sheet-shape, or a combination thereof. When the second compound has the shape, a mixture density of the positive active material may be increased and charge/discharge capacity and charge/discharge efficiency of a battery may be improved.

(Not falling under the protection scope of the present application) Another embodiment provides a method of preparing a positive active material.

(Not falling under the protection scope of the present application) Hereinafter, the preparing method is explained in detail.

A method of preparing a positive active material according to an embodiment includes mixing Compound 1A represented by Chemical Formula 1A, Compound 2A represented by Chemical Formula 2A having a smaller particle diameter than Compound 1A, and a lithium salt to prepare a mixture, first heat-treating the mixture under a rapid temperature-increasing condition to prepare a first fired product including unreacted residual lithium; and second heat-treating the first fired product.

[Chemical Formula 1A]     $Ni_{xC}o_yM^1{}_z(OH)_2$

[Chemical Formula 2A]     $Ni_xCo_yM^2{}_z(OH)_2$

In Chemical Formula 1A and Chemical Formula 2A, $0.5 \leq x \leq 0.6$, $0.05 \leq y \leq 0.35$, $0.05 \leq z \leq 0.35$, $x + y + z = 1$, and $M^1$ and $M^2$ are independently selected from Mn, Al, Cr, Fe, V, Mg, Ti, Zr, Nb, Mo, W, Cu, Zn, Ga, In, Sn, La, and Ce.

In Chemical Formula 1A and Chemical Formula 2A, desirable compositions of Ni, Co, $M^1$, and $M^2$ may share the same range as those of the first compound and second compound represented by Chemical Formula 1 and Chemical Formula 2. In addition, the average particle diameters of Compound 1A and Compound 2A are respectively the same as or a little smaller than those of the first compound and the second compound.

The lithium salt may be a lithium-containing carbonate (e.g., lithium carbonate ($Li_2CO_3$), etc.), a hydroxide (e.g., lithium hydroxide (LiOH), etc.), a hydrate (e.g., lithium hydroxide monohydrate (LiOH- $H_2O$), etc.), a nitrate (e.g., lithium nitrate ($LiNO_3$), etc.), and a chloride (e.g., lithium chloride (LiCl), etc.), and one or a mixture of two or more thereof may be used, and specifically, lithium carbonate or lithium hydroxide may be used.

The lithium salt and Compound 1A and Compound 2A may be mixed so that a mole ratio of Li/(Ni + Co + Mn) may be greater than or equal to about 0.99, for example about 1.00 to about 1.25. When the lithium salt and Compound 1A and Compound 2A are mixed within the mixing ratio ranges, a large amount of unreacted lithium may remain on the surface of the first fired product obtained from the first heat-treating (at least one of the first compound and the second compound), and this residual lithium may react with at least one of Compound 1A and Compound 2A during the second heat-treating and thus form the positive active material including the first compound and the second compound.

The Compound 1A and Compound 2A may be mixed in a weight ratio of about 90:10 to about 50:50, for example, about 80:20 to about 70:30.

The rapid temperature-increasing condition may include a process where a temperature of the mixture is raised from about 25 °C to about 100 °C to a first heat-treating reaction temperature of about 800 °C to about 1000 °C at about 4 °C/min to about 6 °C/min. By performing the rapid temperature-increasing in a short time, it may prevent the cation mixing, and the first fired product may include a large amount of unreacted residual lithium.

Specifically, since the first heat-treating is performed at a high temperature (about 800 °C to about 1000 °C) under an air or oxidizing gas atmosphere for a short time (about 1 hour to about 4 hours), a large amount of a nickel-based transition metal hydroxide not participating in the reaction (at least one of Compound 1A and Compound 2A) is present. Accordingly, Ni is suppressed from being changed into $Ni^{2+}$, and accordingly, the $Ni^{2+}$ is suppressed from moving into a Li site and thus cation mixing may be prevented, and a large amount of unreacted residual lithium may be included on the surface of the nickel-based lithium transition metal oxide (at least of the first compound and the second compound).

On the other hand, the oxidizing gas atmosphere indicates a gas atmosphere including oxygen in the air. The oxidizing gas atmosphere includes oxygen in an amount of about 20 volume% to about 40 volume%.

In the first heat-treating, an insertion height may be greater than or equal to about 5 cm, for example, in a range of about 5 cm to about 8 cm. In this way, when the mixture is inserted into a heat-treatment equipment at the height of greater than or equal to about 5 cm during the first heat-treating, a production may be increased, which is economical relative to a production cost, and in addition, the unreacted residual lithium on the surface of the first fired product may be increased and thus well formed into a positive active material in the subsequent second heat-treating.

Then, the first fired product is subjected to a second heat-treating.

The second heat-treating may be performed under conditions of heating at a rate of about 5 °C/min to about 10 °C/min from about 25 °C to about 100 °C to about 700 °C to about 900 °C, maintaining at about 700 °C to about 900 °C for about 3 hours to about 10 hours, and then cooling down at a rate of about 2.5 °C/min to about 5 °C/min until about 25 °C to about 100 °C.

The second heat-treating may be performed under an oxygen atmosphere with an oxygen amount of about 40 volume% to about 100 volume%.

The Compound 2A may have a needle-shape, a sheet-shape, or a combination thereof. The second compound obtained from the method of preparing the positive active material may be maintained in the shape of Compound 2A as it is.

Another embodiment provides a rechargeable lithium battery including a positive electrode including the positive active material; a negative electrode including a negative active material; and an electrolyte.

The positive electrode includes a current collector and a positive active material layer formed on the current collector and including a positive active material.

The positive active material layer may include a positive active material, and optionally a binder and a conductive material.

The positive active material is the same as described above.

In the positive active material layer, a content of the positive active material may be about 90 wt% to about 98 wt% based on a total weight of the positive active material layer.

The binder may include polyvinyl alcohol, carboxylmethyl cellulose, hydroxypropyl cellulose, diacetyl cellulose, polyvinyl chloride, polyvinylfluoride, polyvinylpyrrolidone, polyurethane, polytetrafluoroethylene, polyvinylidene fluoride, polyethylene, polypropylene, a styrene-butadiene rubber, an acrylated styrene butadiene rubber, an epoxy resin, nylon, and the like, but is not limited thereto.

Examples of the conductive material may include a carbon-based material such as natural graphite, artificial graphite, carbon black, acetylene black, ketjen black, carbon fiber and the like; a metal-based material of a metal powder or a metal fiber including copper, nickel, aluminum, silver, and the like; a conductive polymer such as a polyphenylene derivative; or a mixture thereof.

Herein, each content of the binder and the conductive material may be about 1 wt% to about 5 wt% based on a total weight of the positive active material layer.

The current collector may include an aluminum foil, a nickel foil, or a combination thereof, but is not limited thereto.

The negative electrode includes a current collector and a negative active material layer formed on the current collector and including a negative active material.

The negative active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbonaceous material. The carbonaceous material may be any generally-used carbon-based negative active material in a rechargeable lithium ion battery. Examples thereof may be crystalline carbon, amorphous carbon, or a mixture thereof. The crystalline carbon may be non-shaped, or sheet, flake, spherical, or fiber shaped natural graphite or artificial graphite. The amorphous carbon may be a soft carbon, a hard carbon, a mesophase pitch carbonization product, fired coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be Si, SiOx (0 < x < 2), a Si-Q alloy (wherein Q is an element selected from an alkali metal, an alkaline-earth metal, a Group 13 element, a Group 14 element, a Group 15 element, a Group 16 element, a transition metal, a rare earth element, and a combination thereof, but not Si), Sn, $SnO_2$, a Sn-R alloy (wherein R is an element selected from an alkali metal, an alkaline-earth metal, a Group 13 element, a Group 14 element, a Group 15 element, a Group 16 element, a transition metal, a rare earth element, and a combination thereof, but not Sn), and the like. At least one of these materials may be mixed with $SiO_2$. The elements Q and R may be selected from Mg, Ca, Sr, Ba, Ra, Sc, Y, Ti, Zr, Hf, V, Nb, Ta, Cr, Mo, W, Tc, Re, Fe, Pb, Ru, Os, Rh, Ir, Pd, Pt, Cu, Ag, Au, Zn, Cd, B, Al, Ga, Sn, In, TI, Ge, P, As, Sb, Bi, S, Se, Te, Po, and a combination thereof.

The transition metal oxide may be vanadium oxide, lithium vanadium oxide, or lithium titanium oxide.

In the negative active material layer, the negative active material may be included in an amount of about 95 wt% to about 99 wt% based on the total weight of the negative active material layer.

In an embodiment, the negative active material layer may include a binder, and optionally a conductive material. In the negative active material layer, a content of the binder may be about 1 wt% to about 5 wt% based on a total weight of the negative active material layer. When the negative active material layer further includes a conductive material, the negative active material layer includes about 90 wt% to about 98 wt% of the negative active material, about 1 wt% to about 5 wt% of the binder, and about 1 wt% to about 5 wt% of the conductive material.

The binder improves binding properties of negative active material particles with one another and with a current collector. The binder includes a non-water-soluble binder, a water-soluble binder, or a combination thereof.

The non-water-soluble binder may be selected from an ethylene propylene copolymer, polyacrylonitrile, polystyrene, polyvinylchloride, carboxylated polyvinylchloride, polyvinylfluoride, polyurethane, polytetrafluoroethylene, polyvinylidene fluoride, polyethylene, polypropylene, polyamideimide, polyimide, or a combination thereof.

The water-soluble binder may be selected from a styrene-butadiene rubber (SBR), an acrylated styrene-butadiene rubber (ABR), an acrylonitrile-butadiene rubber, an acrylic rubber, a butyl rubber, a fluorine rubber, an ethylene oxide-containing polymer, polyvinylpyrrolidone, polyepichlorohydrine, polyphosphazene, an ethylenepropylenediene copolymer, polyvinylpyridine, chlorosulfonatedpolyethylene, a latex, a polyester resin, an acrylic resin, a phenolic resin, an epoxy resin, polyvinyl alcohol, or a combination thereof.

When the water-soluble binder is used as a negative electrode binder, a cellulose-based compound may be further used to provide viscosity as a thickener. The cellulose-based compound includes one or more of carboxymethyl cellulose, hydroxypropylmethyl cellulose, methyl cellulose, or alkali metal salts thereof. The alkali metals may be Na, K, or Li. Such a thickener may be included in an amount of about 0.1 to about 3 parts by weight based on 100 parts by weight of the negative active material.

The conductive material may include a carbon-based material such as natural graphite, artificial graphite, carbon black, acetylene black, ketjen black, a carbon fiber, and the like; a metal-based material of a metal powder or a metal fiber including copper, nickel, aluminum silver, and the like; a conductive polymer such as a polyphenylene derivative; or a mixture thereof.

The current collector may include at least one selected from a copper foil, a nickel foil, a stainless steel foil, a titanium foil, a nickel foam, a copper foam, a polymer substrate coated with a conductive metal, and a combination thereof.

The electrolyte includes a non-aqueous organic solvent and a lithium salt.

The non-aqueous organic solvent serves as a medium for transmitting ions taking part in the electrochemical reaction of a battery.

The non-aqueous organic solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), methyl acetate, ethyl acetate, n-propyl acetate, dimethyl acetate, methylpropionate, ethylpropionate, decanolide, mevalonolactone, caprolactone, dibutyl ether, tetraglyme, diglyme, dimethoxyethane, 2-methyltetrahydrofuran, tetrahydrofuran, cyclohexanone, ethanol, isopropyl alcohol, nitriles such as R-CN (R may be a C2 to C20 linear, branched, or cyclic hydrocarbon group and R may include a double bond, an aromatic ring, or an ether bond), and the like, amides such as dimethyl formamide, and the like, dioxolanes such as 1,3-dioxolane, and the like, sulfolanes, and the like.

The organic solvent may be used alone or in a mixture. When the organic solvent is used in a mixture, a mixing ratio may be controlled in accordance with a desirable battery performance.

In addition, the organic solvent may further include an aromatic hydrocarbon-based organic solvent. Specific examples of the aromatic hydrocarbon-based organic solvent may be selected from benzene, fluorobenzene, 1,2-difluorobenzene, 1,3-difluorobenzene, 1,4-difluorobenzene, 1,2,3-trifluorobenzene, 1,2,4-trifluorobenzene, chlorobenzene, 1,2-dichlorobenzene, 1,3-dichlorobenzene, 1,4-dichlorobenzene, 1,2,3-trichlorobenzene, 1,2,4-trichlorobenzene, iodobenzene, 1,2-diiodobenzene, 1,3-diiodobenzene, 1,4-diiodobenzene, 1,2,3-triiodobenzene, 1,2,4-triiodobenzene, toluene, fluorotoluene, 2,3-difluorotoluene, 2,4-difluorotoluene, 2,5-difluorotoluene, 2,3,4-trifluorotoluene, 2,3,5-trifluorotoluene, chlorotoluene, 2,3-dichlorotoluene, 2,4-dichlorotoluene, 2,5-dichlorotoluene, 2,3,4-trichlorotoluene, 2,3,5-trichlorotoluene, iodotoluene, 2,3-diiodotoluene, 2,4-diiodotoluene, 2,5-diiodotoluene, 2,3,4-triiodotoluene, 2,3,5-triiodotoluene, xylene, and a combination thereof.

The electrolyte may further include an additive of vinylene carbonate or an ethylene carbonate-based compound as a cycle-life improvement additive.

Examples of the ethylene carbonate-based compound may be difluoro ethylenecarbonate, chloroethylene carbonate, dichloroethylene carbonate, bromoethylene carbonate, dibromoethylene carbonate, nitroethylene carbonate, cyanoethylene carbonate, fluoroethylene carbonate, and the like. The amount of the cycle-life improvement additive may be used within an appropriate range.

The lithium salt dissolved in an organic solvent supplies a battery with lithium ions, basically operates the rechargeable lithium battery, and improves transportation of the lithium ions between a positive electrode and a negative electrode.

Examples of the lithium salt include at least one supporting salt selected from $LiPF_6$, $LiBF_4$, $LiSbF_6$, $LiAsF_6$, $LiN(SO_2C_2F_5)_2$, $Li(CF_3SO_2)_2N$, $LiN(SO_3C_2F_5)_2$, $Li(FSO_2)_2N$, $LiC_4F_9SO_3$, $LiClO_4$, $LiAlO_2$, $LiAlCl_4$, $LiN(C_xF_{2x+1}SO_2)(C_yF_{2y+1}SO_2)$ (wherein, x and y are natural numbers, for example an integer of 1 to 20), LiCl, LiI, and

$LiB(C_2O_4)_2$ (lithium bis(oxalato) borate, LiBOB).

A concentration of the lithium salt may range from about 0.1 M to about 2.0 M. When the lithium salt is included at the above concentration range, an electrolyte may have excellent performance and lithium ion mobility due to optimal electrolyte conductivity and viscosity.

The rechargeable lithium battery may further include a separator between the negative electrode and the positive electrode, depending on a type of the battery. Examples of a suitable separator material include polyethylene, polypropylene, polyvinylidene fluoride, and multi-layers thereof such as a polyethylene/polypropylene double-layered separator, a polyethylene/polypropylene/polyethylene triple-layered separator, and a polypropylene/polyethylene/polypropylene triple-layered separator.

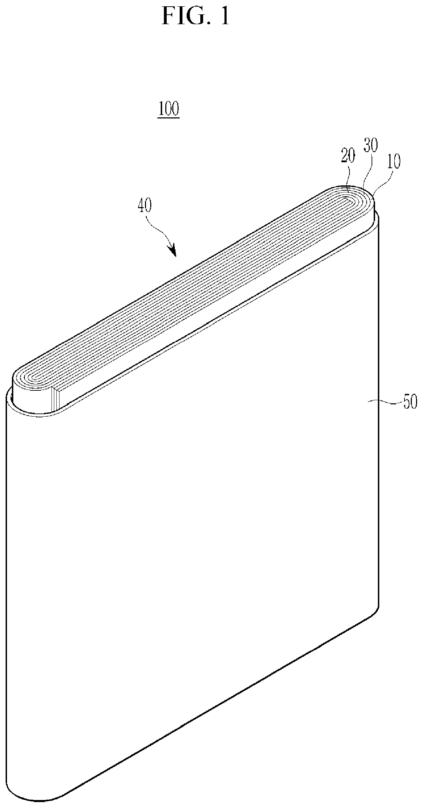

FIG. 1 is an exploded perspective view of a rechargeable lithium battery according to an embodiment. The rechargeable lithium battery according to an embodiment is illustrated as a prismatic battery but is not limited thereto and may include variously-shaped batteries such as a cylindrical battery, a pouch battery, coin-type, and the like.

Referring to FIG. 1, a rechargeable lithium battery 100 according to an embodiment includes an electrode assembly 40 manufactured by winding a separator 30 disposed between a positive electrode 10 and a negative electrode 20, and a battery case 50 housing the electrode assembly 40. An electrolyte (not shown) may be impregnated in the positive electrode 10, the negative electrode 20, and the separator 30.

Hereinafter, examples and comparative examples are described. However, the following examples are merely examples and the present disclosure is not limited thereto.

(Examples)

Example 1

A mixture was prepared by mixing lithium carbonate ($Li_2CO_3$) and $Ni_{0.55}Co_{0.25}Mn_{0.20}(OH)_2$ to provide Li (Ni + Co + Mn) at a mole ratio of 1.01 1.00. Herein, $Ni_{0.55}Co_{0.25}Mn_{0.20}(OH)_2$ was obtained by mixing Compound 1A and Compound 2A having the same composition but different particle diameters in a weight ratio of 8 : 2.

The prepared mixture was subjected to a first heat-treating under conditions of heating at 5 °C/min from 25 °C to 900 °C, maintaining at 900 °C for 2 hours, and then cooling at 5 °C/min until 25 °C to provide a first fired product including a first compound ($Li_{1.01}Ni_{0.55}Co_{0.25}Mn_{0.20}O_2$) and a second compound ($Li_{1.01}Ni_{0.55}Co_{0.25}Mn_{0.20}O_2$). Meanwhile, the first heat-treating process was performed under an air atmosphere in an insertion height of 5 cm.

The first fired product was subjected to a second heat-treating under conditions of heating at 5 °C/min from 25 °C to 850 °C, maintaining at 850 °C for 10 hours, and then cooling down at 5 °C/min until 25 °C to provide a positive active material in which the first compound ($LiNi_{0.55}Co_{0.25}Mn_{0.20}O_2$) and the second compound ($LiNi_{0.55}Co_{0.25}Mn_{0.20}O_2$) are mixed at a weight ratio of 8 : 2. Meanwhile, the second heat-treating was performed under an oxygen ($O_2$) atmosphere.

In this case, an average particle diameter (D50) of the first compound was 20 $\mu$m, an average particle diameter (D50) of the second compound was 3 $\mu$m, and an average of the average particle diameters (D50) of the first compound and the second compound was 17 $\mu$m. Meanwhile, the second compound had a shape of combining a long needle shape and a sheet shape.

Comparative Example 1

The commercial product NCM111 ($LiNi_{1/3}Co_{1/3}Mn_{1/3}$, Yumi Koa Co., Ltd.) was used as the positive active material.

Comparative Example 2

The commercial product NCM523 ($LiNi_{0.5}Co_{0.2}Mn_{0.3}$, Easpring) was used as the positive active material.

Comparative Example 3

A mixture was prepared by mixing lithium carbonate ($Li_2CO_3$) and Compound 1A $Ni_{0.55}Co_{0.25}Mn_{0.20}(OH)_2$ to provide Li: (Ni + Co + Mn) at a mole ratio of 1.03 : 1.

The prepared mixture was subjected to a heat treatment under conditions of heating at 2.5 °C/min from 25 °C to 850 °C, maintaining at 850 °C for 20 hours, and then cooling down at 2.5 °C/min until 25 °C to provide a first compound ($Li_{1.03}Ni_{0.55}Co_{0.25}Mn_{0.20}O_2$). Meanwhile, the heat-treating process was performed in an insertion height of 5 cm under an air atmosphere.

Lithium carbonate ($Li_2CO_3$) and Compound 2A ($Ni_{0.55}Co_{0.25}Mn_{0.20}(OH)_2$) having a combination of long needle shapes and sheet shapes are mixed to provide Li: (Ni + Co + Mn) at a mole ratio of 1.00 to 1.01 : 1, and the mixture was subjected to a heat treatment under conditions of heating at 2.5 °C/min from 25 °C to 750 °C, maintaining at 750 °C for 15 hours, and then cooling down at 5 °C/min until 25 °C to provide a second compound represented by $Li_{1.00}Ni_{0.55}Co_{0.25}Mn_{0.20}O_2$. The process was performed under an air atmosphere.

The first compound and the second compound are mixed at a weight ratio of 8 : 2, and the mixture was subjected to a third heat-treating under a condition of 400 °C to provide a positive active material including the first compound and the second compound.

Herein, the first compound has an average particle diameter (D50) of 20 $\mu$m and the second compound has an average particle diameter (D50) of 3 $\mu$m.

Comparative Example 4

The commercial product NCM622 ($LiNi_{0.6}Co_{0.2}Mn_{0.2}$, Yumi Koa Co., Ltd.) was used as the positive active material.

Comparative Example 5

The commercial product NCM701515 ($LiNi_{0.7}Co_{0.15}Mn_{0.15}$, L&F Co., Ltd.) was used as the positive active material.

Comparative Example 6

The commercial product NCM811 ($LiNi_{0.8}Co_{0.1}Mn_{0.1}$, Yumi Koa Co., Ltd.) was used as the positive active material.

(Manufacture of Test Cells)

Example 2

94 wt% of positive active material prepared in Example 1, 3 wt% of ketjen black, and 3 wt% of polyvinylidene fluoride were mixed in N-methyl pyrrolidone solvent to prepare positive active material slurry. The positive active material slurry was coated on an Al foil followed by drying and compressing the same to manufacture a positive electrode. The 2032-type a half-cell was manufactured by a conventional method using the positive electrode, a lithium metal counter electrode, and an electrolyte. The electrolyte was a mixed solvent (50: 50 volume ratio) of ethylene carbonate and dimethyl carbonate in which 1.0 M $LiPF_6$ was dissolved.

Comparative Examples 7 to 12

Each 2032-type half-cell was manufactured according to the same method as Example 2, except that each positive active material prepared in Comparative Example 1 to Comparative Example 6 was used.

(Evaluation Examples)

The half-cells according to Example 2 and Comparative Examples 7 to 12 were CC/CV-charged at 0.2 C and 4.25 V with a cut-off of 0.05 C and CC-discharged at 0.2 C with a cut-off of 3 V for the first charge/discharge (1C = 180 mAh/g), and subsequently, the second charge/discharge were performed in the same method as the first charge/discharge.

The 1st differential capacity (dQ/dV)-voltage charge/discharge graphs according to the first charge/discharge and the 2nd differential capacity (dQ/dV)-voltage charge/discharge graphs according to the second charge/discharge were measured.

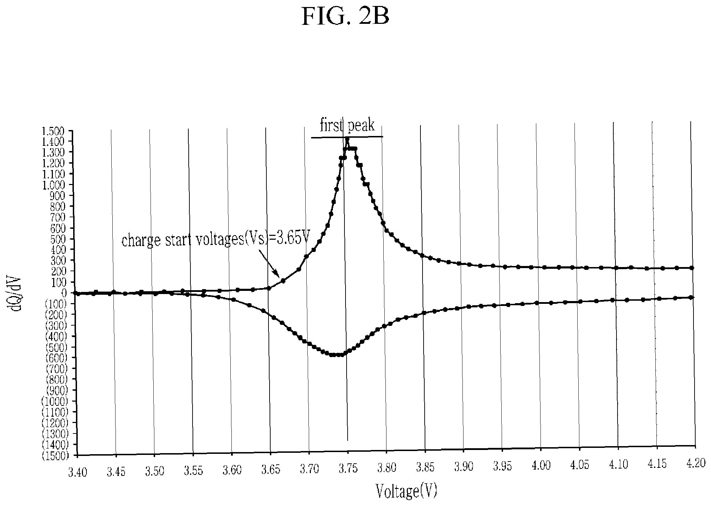

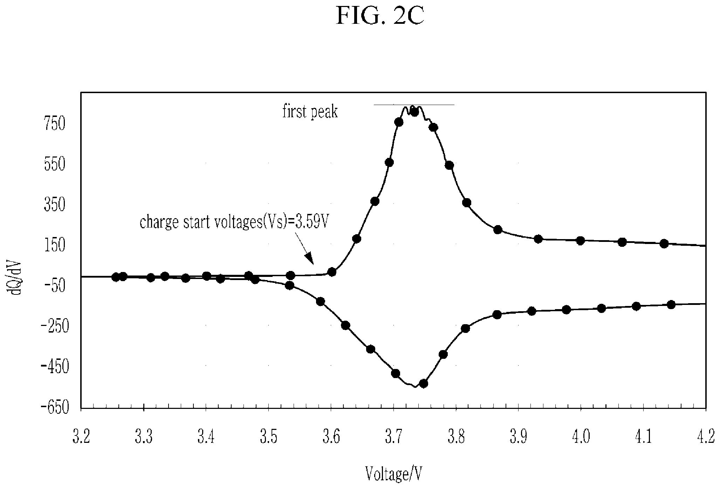

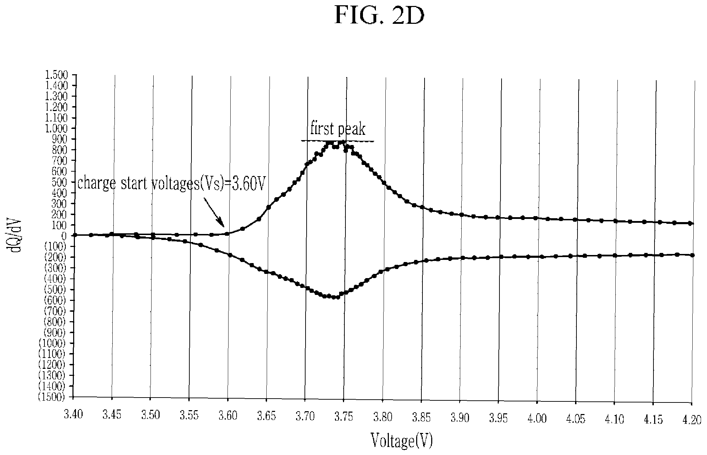

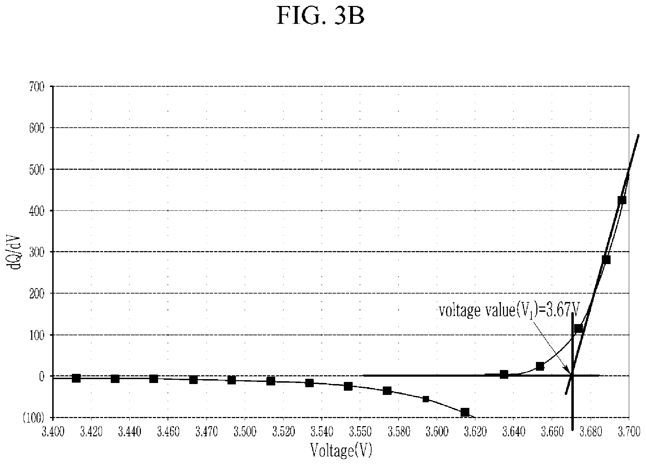

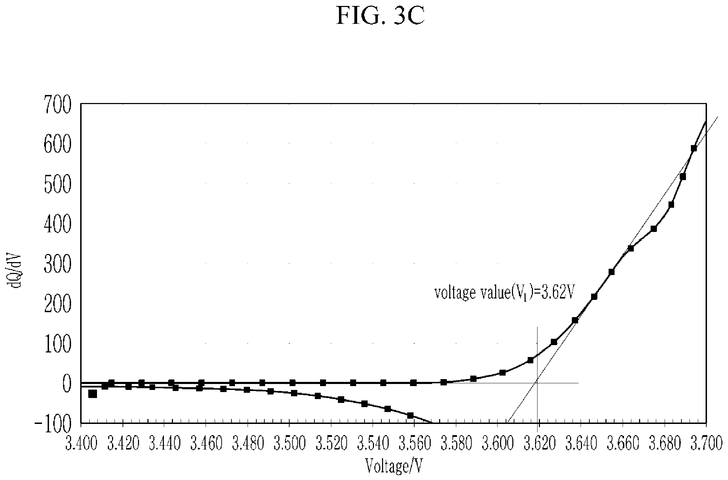

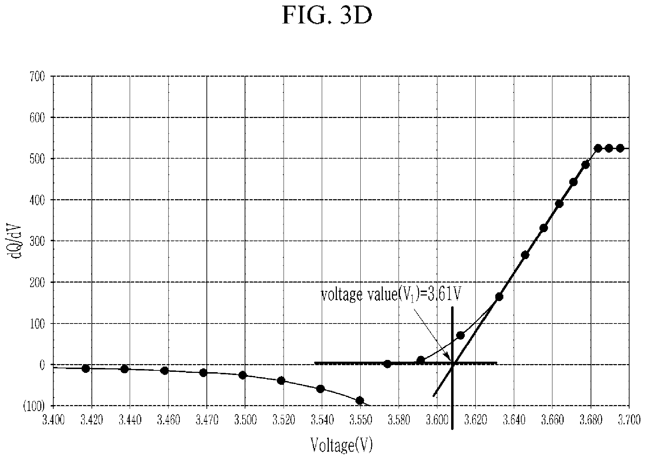

The 1st differential capacity (dQ/dV)-voltage charge/discharge graphs of Example 2 and Comparative Examples 8 to 10 according to the first charge/discharge are respectively shown in FIGS. 2A and 3A (Example 2), FIGS. 2B and 3B (Comparative Example 8), FIGS. 2C and 3C (Comparative Example 9), and FIGS. 2D and 3D (Comparative Example 10).

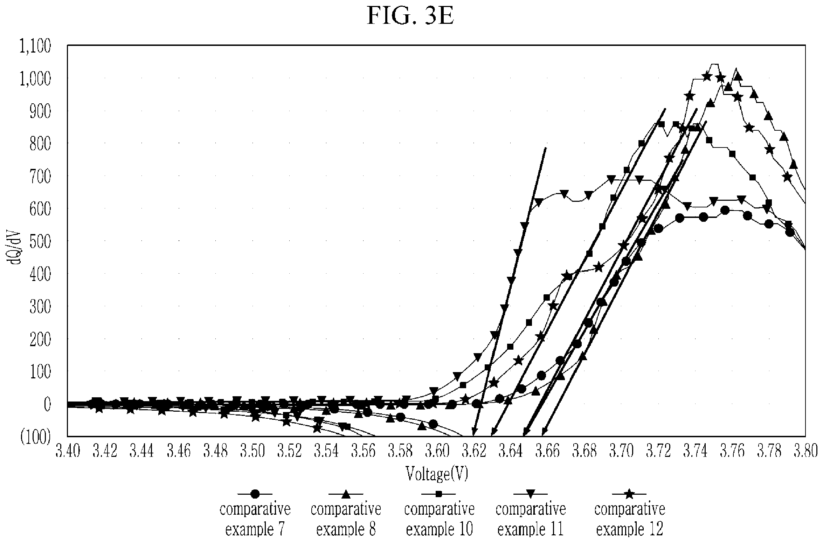

In addition, the 1st differential capacity (dQ/dV)-voltage charge/discharge graphs according to Comparative Examples 7, 8, and 10 to 12 are also shown in FIG. 3E.

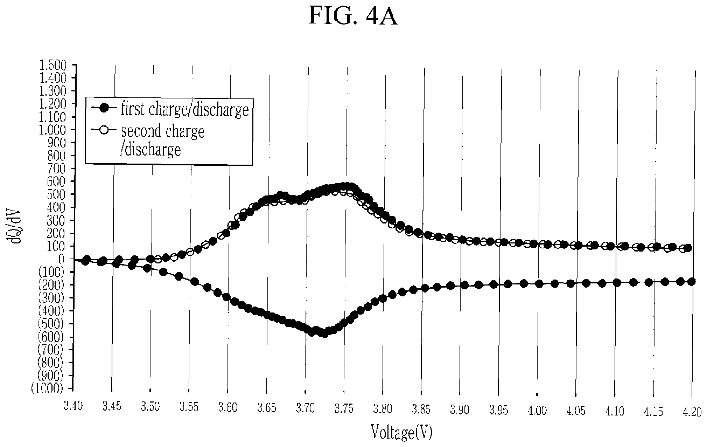

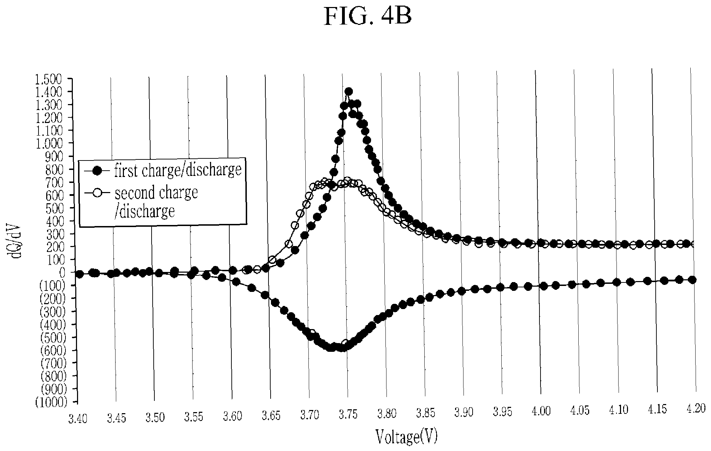

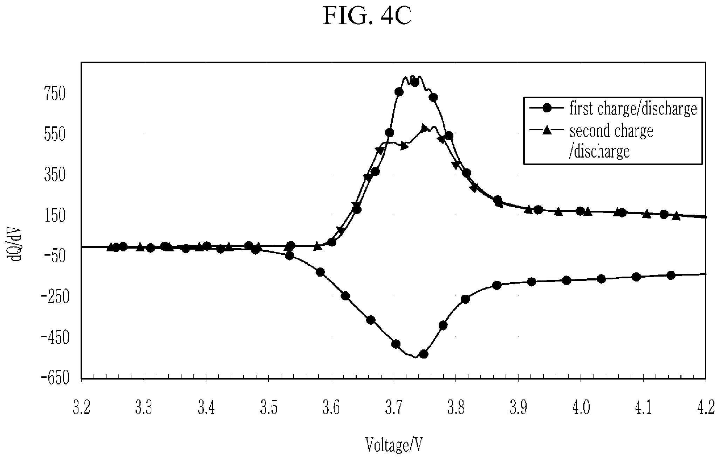

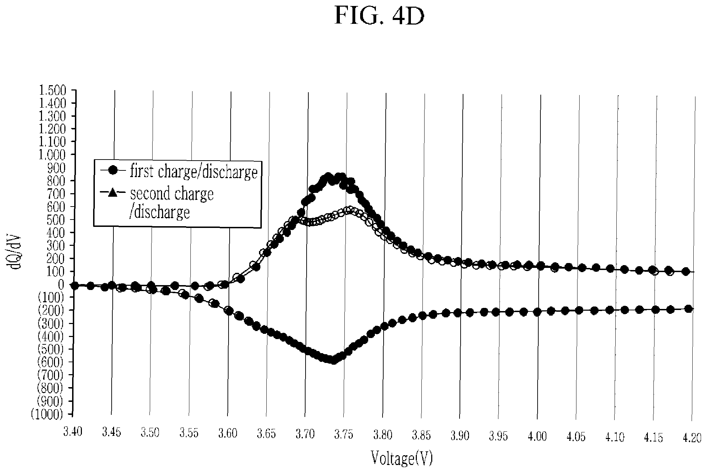

In addition, FIG. 4A shows the 1st differential capacity (dQ/dV)-voltage charge/discharge graph of Example 2 according to the first charge/discharge and the 2nd differential capacity (dQ/dV)-voltage charge/discharge graph of Example 2 according to the second charge/discharge, and FIGS. 4B, 4C, and 4D respectively show the graphs of Comparative Examples 8 to 10.

In addition, each charge capacity, discharge capacity, and charge/discharge efficiency according to the first charge/discharge and the second charge/discharge are shown in Table 1.

(Table 1)

| | | Charge capacity (mAh/g) | Discharge capacity (mAh/g) | Charge/discha rge efficiency (%) |
|---|---|---|---|---|
| Example 2 (NCM552520) | 1st charge/ discharge | 186.4 | 172.4 | 92.5 |
| | 2nd charge/ discharge | 172.3 | 172.0 | 99.8 |
| | Difference (1st - 2nd) | 14.1 | 0.4 | - |
| Comparative Example 8 (NCM523) | 1st charge/ discharge | 180.1 | 159.4 | 88.5 |
| | 2nd charge/ discharge | 159.3 | 158.8 | 99.7 |
| | Difference (1st - 2nd) | 20.8 | 0.6 | - |
| Comparative Example 9 (NCM552520) | 1st charge/ discharge | 185.3 | 163.7 | 88.3 |
| | 2nd charge/ discharge | 163.5 | 162.8 | 99.6 |
| | Difference (1st - 2nd) | 21.8 | 0.9 | - |
| Comparative Example 10 | 1st charge/ discharge | 186.1 | 167.9 | 90.2 |
| | 2nd charge/ discharge | 167.7 | 167.2 | 99.7 |
| (NCM622) | Difference (1st - 2nd) | 18.4 | 0.7 | - |

Evaluation Example 1: Initial Charge and Discharge Capacity and Charge and Discharge Efficiency

As shown in Table 1, the half-cell of Example 2 using the positive active material of Example 1 exhibited improved initial charge/discharge capacity and charge/discharge efficiency compared with the half-cells of Comparative Examples 8 to 10 respectively using the positive active materials of Comparative Examples 2 to 4.

In addition, the half-cell of Example 2 exhibited a little decrease (14.1 mAh/g) of the 2nd charge capacity relative to the 1st charge capacity, but the half-cells of Comparative Examples 8 to 10 exhibited a relatively large decrease (18.4 mAh/g to 21.8 mAh/g), and the reason is that as for Comparative Examples 8 to 10, the positive active materials had phase structure changes during the initial charge/discharge.

Evaluation Example 2: 1st Differential Capacity (dQ/dV)-Voltage Charge/Discharge Graph The 1st differential capacity (dQ/dV)-voltage charge/discharge graphs of the half-cells according to Example 2 and Comparative Examples 7 to 12 were analyzed, and charge start voltages ($V_s$) and voltages ($V_1$) thereof are shown in Table 2.

(Table 2)

| | Charge start voltage ($V_s$) (Volt) | Voltage ($V_1$) (Volt) |
|---|---|---|
| Comparative Example 7 (NCM111) | 3.63 | 3.65 |
| Comparative Example 8 (NCM523) | 3.62 | 3.66 |

(continued)

|  | Charge start voltage (V$_s$) (Volt) | Voltage (V$_1$) (Volt) |
|---|---|---|
| Example 2 (NCM552520) | 3.52 | 3.56 |
| Comparative Example 9 (NCM552520) | 3.59 | 3.62 |
| Comparative Example 10 (NCM622) | 3.59 | 3.63 |
| Comparative Example 11 (NCM701515) | 3.58 | 3.62 |
| Comparative Example 12 (NCM811) | 3.60 | 3.65 |

The positive active materials showed consistent tendency in terms of charge/discharge characteristics depending on a nickel content, and referring to Table 2 and FIGS. 2A to 2D, 3A to 3D, and 3E, as each nickel content of the positive active materials increases, charge start voltages (V$_s$) and voltages (V$_1$) thereof tend to decrease. Referring to this result and the experiment results of Comparative Examples 8 to 10 of Table 1, as the charge start voltages (V$_s$) and voltages (V$_1$) decreased, charge/discharge capacity and charge/discharge efficiency thereof were improved.

However, the half-cell of Example 2 included even 55 at% of nickel but was out of the aforementioned tendency and specifically, exhibited much decreased charge start voltage (V$_s$) and voltage (V$_1$) compared with Comparative Examples 9 to 12 including nickel at a high content, and accordingly, charge/discharge capacity and charge/discharge efficiency of Example 2 were much improved.

On the other hand, referring to FIGS. 2A to 2D, the 1$^{st}$ differential capacity (dQ/dV)-voltage charge/discharge graph of the half-cell of Example 2 showed two peaks within a range of 3.60 V to 3.85 V, wherein the second peak value (differential capacity) was larger than the first peak value (differential capacity). On the other hand, the 1$^{st}$ differential capacity (dQ/dV)-voltage charge/discharge graphs of the half-cells of Comparative Examples 7 to 12 showed a single peak within a range of 3.60 V to 3.85 V.

Evaluation Example 3: 1$^{st}$ and 2$^{nd}$ Differential Capacity (dQ/dV)-Voltage Charge/Discharge Graph

Referring to FIGS. 4A to 4D, the 1$^{st}$ differential capacity (dQ/dV)-voltage charge/discharge graph and the 2$^{nd}$ differential capacity (dQ/dV)-voltage charge/discharge graph of the half-cell according to Example 2 were almost the same (refer to FIG. 4A), and the reason is that the positive active material had no phase structure change during the initial charge/discharge. On the contrary, the half-cells according to Comparative Examples 8 to 10 exhibited that the 2$^{nd}$ differential capacity (dQ/dV)-voltage charge/discharge graphs changed from the 1$^{st}$ differential capacity (dQ/dV)-voltage charge/discharge graphs (refer to FIGS. 4B, 4C, and 4D), and the reason is that the positive active materials exhibited a phase structure change during the initial charge/discharge.

Accordingly, phase stability of the positive active material of the half-cell according to Example 2 was improved compared with that of the positive active materials of the half-cells according to Comparative Examples 8 to 10, and accordingly, charge/discharge capacity and charge/discharge efficiency thereof were improved.

Evaluation Example 4: High Temperature Cycle-life Characteristics

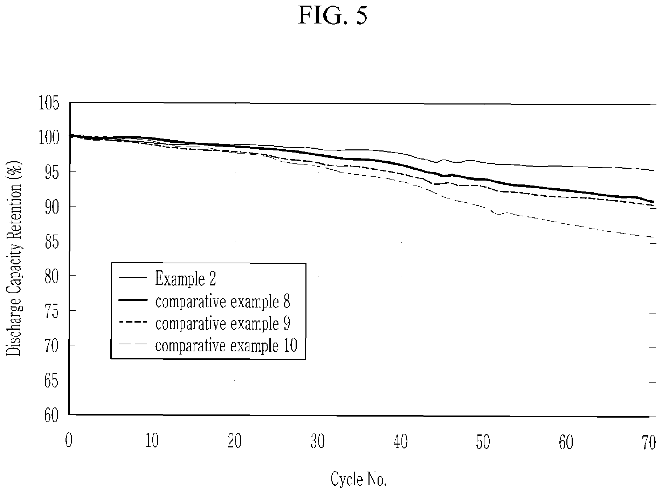

The half-cells of Example 2 and Comparative Examples 7 to 12 were charged at a constant current-constant voltage and 1.0 C (1 C = 180 mA/g) under a cut-off condition of 4.25 V and 0.05 C at a high temperature of 45° C and discharged at a constant current and 1.0 C under a cut-off condition of 3.0 V, and this charge/discharge were 70 times repeated to measure discharge capacity. A ratio of discharge capacity at each cycle relative to the 1$^{st}$ discharge capacity was obtained. The results of Example 2 and Comparative Examples 8 to 10 are shown in FIG. 5.

Referring to FIG. 5, the half-cell of Example 2 exhibited excellent high temperature cycle-life characteristics compared with the half-cells according to Comparative Examples 8 to 10.

**Claims**

1. A positive active material for a rechargeable lithium battery, comprising particles of a first compound represented by Chemical Formula 1 and particles of a second compound represented by Chemical Formula 2, wherein the particles of the first compound have an average particle diameter D50 of 15 μm to 20 μm and the particles of the second compound have an average particle diameter D50 of 2 μm to 5 μm measured by scanning electron microscopy, SEM,

wherein the first compound and the second compound have a Ni content of 50 at% to 60 at% of the metal elements excluding Li:

[Chemical Formula 1]    $Li_aNi_xCo_yM^1{}_zO_2$

[Chemical Formula 2]    $Li_aNi_xCo_yM^2{}_zO_2$

wherein, in Chemical Formula 1 and Chemical Formula 2, $0.9 \leq a \leq 1.05$, $0.5 \leq x \leq 0.6$, $0.05 \leq y \leq 0.35$, $0.05 \leq z \leq 0.35$, $x + y + z = 1$, and $M^1$ and $M^2$ are independently at least one metal element selected from Mn, Al, Cr, Fe, V, Mg, Ti, Zr, Nb, Mo, W, Cu, Zn, Ga, In, Sn, La, and Ce,
wherein at least one of the particles of the first compound and the particles of the second compound comprises a core and a surface layer surrounding the core and a Ni atom concentration (at%) of the metal elements except Li in the surface layer is higher than a Ni atom concentration (at%) of the metal elements except Li in the core.

2.  The positive active material of claim 1, wherein the surface layer is a region corresponding to a depth of 200 nm from the surface of particles of the first compound or particles of the second compound.

3.  The positive active material of any one of the preceding claims, wherein a cation mixing is less than or equal to 3%.

4.  The positive active material of claim 1, wherein the particles of the second compound have a needle-shape, a sheet-shape, or a combination thereof.

5.  The positive active material of claim 1, wherein the particles of the first compound and the particles of the second compound are mixed in a weight ratio of 90 : 10 to 50 : 50.

6.  A rechargeable lithium battery, comprising

    a positive electrode comprising a positive active material of any one of claims 1 - 5;
    a negative electrode comprising a negative active material; and
    an electrolyte.


**Patentansprüche**

1.  Ein positives Aktivmaterial für eine wiederaufladbare Lithiumbatterie, aufweisend

    Partikel einer durch die chemische Formel 1 dargestellten ersten Verbindung und Partikel einer durch die chemische Formel 2 dargestellten zweiten Verbindung, wobei die Partikel der ersten Verbindung einen mittleren Partikeldurchmesser D50 von 15 μm bis 20 μm aufweisen und die Partikel der zweiten Verbindung einen mittleren Partikeldurchmesser D50 von 2 μm bis 5 μm aufweisen, die durch Rasterelektronenmikroskopie, REM, gemessen werden,
    wobei die erste Verbindung und die zweite Verbindung einen Ni-Gehalt von 50 At-% bis 60 At-% der Metallelemente ausgenommen Li aufweisen:

    [Chemische Formel 1]    $Li_aNi_xCo_yM^1{}_zO_2$

    [Chemische Formel 2]    $Li_aNi_xCo_yM^2{}_zO_2$

    wobei in der chemischen Formel 1 und chemischen Formel 2 $0{,}9 \leq a \leq 1{,}05$, $0{,}5 \leq x \leq 0{,}6$, $0{,}05 \leq y \leq 0{,}35$, $0{,}05 \leq z \leq 0{,}35$, $x + y + z = 1$ und $M^1$ und $M^2$ unabhängig voneinander zumindest ein Metallelement ausgewählt aus Mn, Al, Cr, Fe, V, Mg, Ti, Zr, Nb, Mo, W, Cu, Zn, Ga, In, Sn, La und Ce sind,
    wobei zumindest einer der Partikel der ersten Verbindung und der Partikel der zweiten Verbindung einen Kern und eine Oberflächenschicht, die den Kern umgibt, aufweist und eine Ni-Atomkonzentration (At-%) der Metallelemente ausgenommen Li in der Oberflächenschicht höher ist als eine Ni-Atomkonzentration (At-%) der Metallelemente ausgenommen Li im Kern.

2.  Das positive Aktivmaterial nach Anspruch 1, wobei die Oberflächenschicht ein Bereich ist, der einer Tiefe von 200 nm von der Oberfläche der Partikel der ersten Verbindung oder der Partikel der zweiten Verbindung entspricht.

3. Das positive Aktivmaterial nach einem der vorhergehenden Ansprüche, wobei eine Kationenmischung kleiner als oder gleich 3% ist.

4. Das positive Aktivmaterial nach Anspruch 1, wobei die Partikel der zweiten Verbindung eine Nadelform, eine Plattenform oder eine Kombination davon aufweisen.

5. Das positive Aktivmaterial nach Anspruch 1, wobei die Partikel der ersten Verbindung und die Partikel der zweiten Verbindung in einem Gewichtsverhältnis von 90 : 10 bis 50 : 50 gemischt sind.

6. Eine wiederaufladbare Lithiumbatterie, aufweisend

eine positive Elektrode, aufweisend ein positives Aktivmaterial nach einem der Ansprüche 1 bis 5;
eine negative Elektrode, aufweisend ein negatives Aktivmaterial; und
einen Elektrolyt.


**Revendications**

1. Matériau actif positif pour une batterie rechargeable au lithium, comprenant

des particules d'un premier composé représenté par la formule chimique 1 et des particules d'un deuxième composé représenté par la formule chimique 2, où les particules du premier composé ont une granulométrie moyenne D50 de 15 $\mu$m à 20 $\mu$m et les particules du deuxième composé ont une granulométrie moyenne D50 de 2 $\mu$m à 5 $\mu$m, mesurée par microscopie électronique à balayage, MEB,
dans lequel le premier composé et le deuxième composé ont une teneur en Ni de 50 % atomiques à 60 % atomiques des éléments métalliques à l'exclusion du Li :

$$[\text{formule chimique 1}] \qquad Li_aNi_xCo_yM^1_zO_2$$

$$[\text{formule chimique 2}] \qquad Li_aNi_xCo_yM^2_zO_2$$

où, dans la formule chimique 1 et la formule chimique 2, $0,9 \leq a \leq 1,05$, $0,5 \leq x \leq 0,6$, $0,05 \leq y \leq 0,35$, $0,05 \leq z \leq 0,35$, $x + y + z = 1$, et $M^1$ et $M^2$ sont indépendamment au moins un élément métallique choisi parmi Mn, Al, Cr, Fe, V, Mg, Ti, Zr, Nb, Mo, W, Cu, Zn, Ga, In, Sn, La et Ce,
dans lequel au moins l'une parmi les particules du premier composé et les particules du deuxième composé comprend un cœur et une couche de surface entourant le cœur et la concentration d'atomes Ni (% atomiques) des éléments métalliques à l'exception du Li dans la couche de surface est supérieure à la concentration d'atomes Ni (% atomiques) des éléments métalliques à l'exception du Li dans le cœur.

2. Matériau actif positif selon la revendication 1, dans lequel la couche de surface est une région correspondant à une profondeur de 200 nm depuis la surface de particules du premier composé ou de particules du deuxième composé.

3. Matériau actif positif selon l'une quelconque des revendications précédentes, dans lequel un mélange de cations est inférieur ou égal à 3 %.

4. Matériau actif positif selon la revendication 1, dans lequel les particules du deuxième composé ont une forme d'aiguille, une forme de feuille, ou une combinaison de celles-ci.

5. Matériau actif positif selon la revendication 1, dans lequel les particules du premier composé et les particules du deuxième composé sont mélangées en un rapport en poids de 90:10 à 50:50.

6. Batterie rechargeable au lithium comprenant

une électrode positive comprenant un matériau actif positif de l'une quelconque des revendications 1 à 5 ;
une électrode négative comprenant un matériau actif négatif ; et
un électrolyte.

# FIG. 1

## FIG. 2A

# FIG. 2B

FIG. 2C

EP 3 706 208 B1

FIG. 2D

EP 3 706 208 B1

## FIG. 3A

EP 3 706 208 B1

FIG. 3B

EP 3 706 208 B1

## FIG. 3C

voltage value$(V_1)$=3.62V

Voltage/V

dQ/dV

FIG. 3D

FIG. 3E

EP 3 706 208 B1

FIG. 4A

## FIG. 4B

EP 3 706 208 B1

## FIG. 4C

## FIG. 4D

FIG. 5

**EP 3 706 208 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3396746 A1
- US 2019067689 A1
- US 2013323598 A1
- US 2012015250 A1
- WO 2014205215 A2
- EP 3647269 A1